# EUROPEAN PATENT SPECIFICATION

(11) **EP 2 664 422 B1**
(45) Date of publication and mention of the grant of the patent: **22.07.2015**
(21) Application number: 12168065.6
(22) Date of filing: 15.05.2012
(51) Int. Cl.: B25J 19/00, B23K 11/31

(54) **Multi-axis industrial robot with integrated tool**
Mehrachsroboter mit integriertem Werkzeug
Robot multiaxe avec outil intégré

(43) Date of publication of application: 20.11.2013
(73) Proprietor: COMAU S.p.A., 10095 Grugliasco (Torino) (IT)
(72) Inventor: Ferrero Fulvio, 10095 Grugliasco (Torino) (IT); Mauletti Enrico, 10095 Grugliasco (Torino) (IT)
(74) Representative: Notaro, Giancarlo

(56) References cited:
- JP-A- 2000 334 689
- US-B1- 6 455 800
- US-B2- 7 430 939
- US-B2- 7 968 815

## Description

### Field of invention

The present invention relates to the field of multi-axis industrial robots, of the type indicated in claim 1 comprising a base structure, an articulated robot wrist and a chain of mutually articulated robot elements which connect said base structure to said robot wrist, wherein said robot wrist also ends with a flange, to which a tool is rigidly connected that requires a power supply and/or a fluid supply, and wherein through said chain of mutually articulated robot elements, and through said robot wrist, a continuous internal passage is defined in which one or more cables and/or pipes for said power supply and/or said fluid supply to the tool are received.

### Prior art and general technical problem

A robot of the type specified above is, for example, described and illustrated in document US 8,006,586 B2 owned by the same Applicant. A welding head of the type used in such robots is disclosed for example in document US 7 968 815 B2. Document JP 2000 334689 A discloses a hollow robot wrist for use with a generic tool, where cables and pipes of the robot continue without interruption through the robot flange and up to the tool.

In robots of the type specified above, the harnessing of cables and pipes for the power supply and the fluid supply to the tool carried by the robot poses several problems. On the one hand it is necessary to prepare systems for retaining and guiding the cables and pipes that minimize the risk that they may interfere or become entangled with foreign bodies during the use of the robot in a production line. On the other hand it is also necessary to guide and protect the cables or pipes in order to reduce the deformation of bending and torsion as much as possible, to which they are subject during the movements of the robot, and especially so as to reduce the deterioration to which the cables are subject to due to exposure to aggressive external agents (weld splatter, dirt, etc.) that are often found in an industrial production line. Exposure of the cables to these agents often leads to greater and premature wear of such components, with the result that the harnessing of cables and pipes must be replaced more frequently (even after just one or two years from the first use), consequently requiring a greater number of stops and a lower productivity of the robot. Finally, it is also important to prepare the harnessing in such a way that its replacement can be carried out in a simple and rapid manner.

### Object of the invention

The object of the present invention is to solve all the above problems in an optimum manner, by creating a robot which is generally more efficient in its use and requires the minimum number of maintenance operations.

### Summary of the invention

In view of achieving this scope, the invention has as its principal object: a multi-axis industrial robot having all the characteristics of claim 1.

An essential advantage of the present invention is that the total protection of the cables and supply pipes completely avoids the premature wear of these components determined in the known solutions from contamination by aggressive external agents (weld splatter, dirt, etc.) present in industrial environments. Experiments conducted by the applicant have allowed us to predict that the invention will result in an enormous advantage in terms of less replacements of the harnessing of the robot, since the average duration of a harnessing can change from a minimum time of about 1.5-2 years to a minimum time of about 8-10 years, almost comparable to the life of the robot. The invention is therefore able to produce a real breakthrough in the practice of robot use.

The supporting structure of the head may be fixed by screws to the robot flange, preferably with the interposition of an intermediate bracket.

In the welding head, the body of the electrical transformer may present a rear wall facing towards the robot flange, a front wall opposite the rear wall, two side walls, and two end walls. Two output poles of the transformer, which are connected to the two electrode-holding arms, may be disposed: one on said front wall and the other one on said end walls of the body of the transformer. Thanks to this arrangement, the linking strips connecting the output poles of the electrical transformer to the respective electrode-holding arm can be arranged according to configurations that guarantee a more compact size of the welding head, particularly in the longitudinal direction of the head, i.e. in a direction which goes from the flange of the robot towards the electrodes.

It should also be noted that, for reasons of easier maintenance, the pipes for supplying fluid to the tool can still be provided with a separated end portion, associated with the tool, and connected by means of quick couplings to the corresponding pipes associated with the robot. In this case, the basic principle of the invention is still applied to the electrical cables (power and/or signal) associated with the robot.

### Brief Description of the Figures

The invention will now be described with reference to the accompanying drawings, provided purely by way of a non-limiting example, wherein:
- Figure 1 is a schematic representation of a multi-axis industrial robot according to the prior art from the document US 8,006,586 B2 of the Applicant,
- Figure 2 is a view on an enlarged scale and in section of the robot wrist of Figure 1,
- Figure 3 is a side view in elevation, schematic, of a first embodiment of the robot according to the invention,
- Figure 4 is a schematic perspective view of a second embodiment of the robot of the invention,
- Figure 5 is a perspective view on an enlarged scale of the welding head used in both embodiments of Figures 3, 4,
- Figure 6 is a schematic side view of the internal structure of the welding head of Figure 5,
- Figure 7 is a perspective view of the internal structure of the head of Figure 5,
- Figure 8 is a perspective view of the electrical transformer arranged in the welding head of Figure 5,
- Figures 9-12 are perspective views on an enlarged scale that illustrate various details of the internal structure shown in Figure 6,
- Figure 13 is a perspective view of a variant of the welding head which can be used in both the embodiments of Figures 3 and 4,
- Figure 14 is a schematic side view of the internal structure of the welding head of Figure 13,
- Figure 15 is a perspective view of the internal structure of the welding head of Figure 13,
- Figure 16 is a perspective view of the robot of Figure 3, with the welding head removed,
- Figure 17 is a further schematic side view, partially sectioned, of the robot of Figure 3, and
- Figure 18 is a perspective view on an enlarged scale of the connecting bracket between the flange of the robot and the supporting structure of the welding head.

### Detailed description of the preferred embodiment

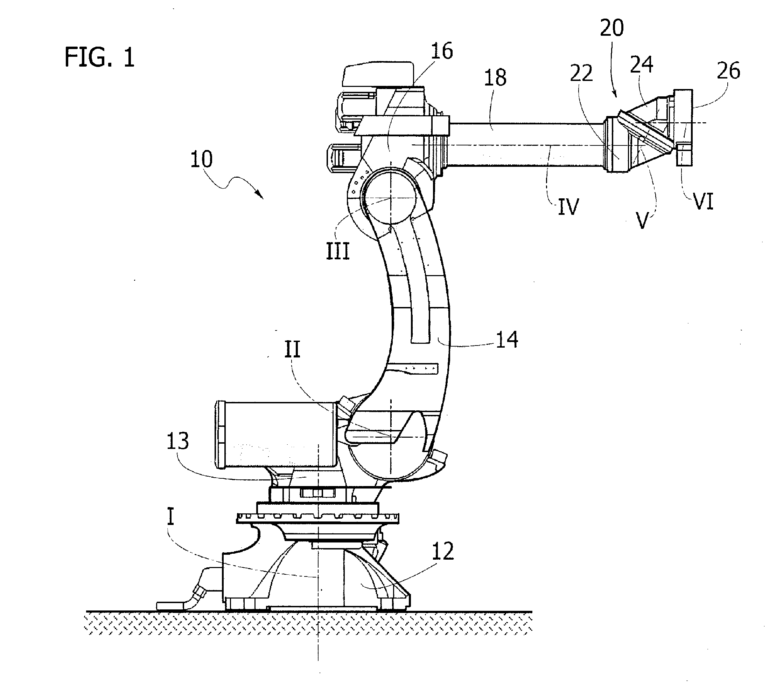

With reference to Figure 1, the preferred embodiment of the present invention makes use of a similar robot to the known robot from U.S. 8,006,586 B2 shown in this figure. It is clear however that the same teachings of the present invention are also applicable to robots having a different configuration.

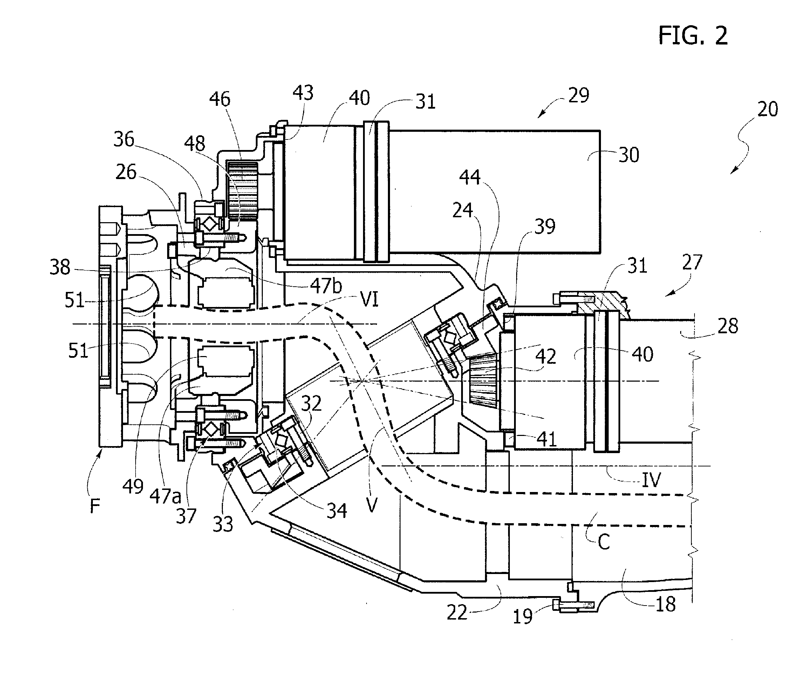

In the case of the example illustrated in Figure 1, the robot 10 comprises a base structure 12 which supports an upright 13 so as to rotate about a first vertical axis I. The upright 13 in turn supports a vertical arm 14 so as to rotate about a second axis II, directed horizontally. The upper end of the vertical arm 14 in turn supports a structure 16 supporting an arm 18 so as to rotate around a third axis III, directed horizontally. The arm 18 is supported by the structure 16 around a fourth axis IV, which coincides with the main axis of the arm 18. The distal end of the arm 18 carries an articulated wrist 20 which is illustrated on an enlarged scale and in section in Figure 2. As will be apparent in the following description, the main feature of the wrist 20 resides in the fact that it is a hollow wrist, adapted to define a continuous passage through itself, in which the bundle of supply cables and pipes of the tool can be guided. It is evident, however, that the teachings of the present invention are also applicable to a robot having any different configuration and in particular a hollow wrist of a different configuration from that illustrated here by way of example.

With reference to Figure 2, the wrist 20 comprises a first hollow body 22 essentially elbow-shaped, and including a first and a second end and a through cavity, leading to such ends. The first end of the first hollow body 22 is intended to be rigidly connected by screws 19 to the robot arm 18 rotatable about the axis IV. The wrist 20 comprises, moreover, a second hollow body 24 essentially elbow-shaped, and comprising a first and a second end and a passing cavity leading to these ends. The first end of the second hollow body 24 is mounted on the second end of the first hollow body 22, rotatable about a V axis inclined with respect to the first axis IV. The wrist 20 finally comprises a third hollow body 26 comprising a first and a second end and a passing cavity leading to these ends. The first end of the third hollow body is mounted on the second end of the second hollow body 24, rotatable about an axis VI inclined with respect to the second axis V.

As already indicated, the passing cavities of said first, second and third hollow body 22, 24, 26 form a continuous passage along the axes IV, V, VI, through which cables and/or pipes are arranged for the power supply, the fluid supply and the control of the tool associated with a flange F leaving from the third hollow body 26. The said passage has a substantial capacity for which there is a considerable number of cables and/or pipes that are able to receive. For example, in the case that the tool is an electric spot welding head, the power supply lines that pass through the internal passage of the robot wrist comprise two delivery pipes of a refrigerant fluid, two return pipes of the refrigerant fluid, a cable to the control the signal of an electric drive motor of the head, a power cable of this electric motor, a multi-bus cable, and three power supply cables (or, alternatively, a single power cord with three wires) for the electric current welding.

Again with reference to the illustrated example, the axes IV and VI are inclined with respect to the axis V by an angle between about 50° and 70°. Preferably, this angle of inclination is 60°. This choice of inclination of the axis of rotation V, relative to the axes IV and VI, allows the obtainment of a wide working-range of the robot wrist, and at the same time ensures a simple and continuous passage of cables and/or pipes within the wrist. As can be seen, in the condition wherein the axes IV, V, VI are coplanar, they define a Z configuration.

Again with reference to the illustrated example, at the connection between the arm 18 and the hollow body 22, housing for a first gearmotor group 27 is provided. According to the size of the first hollow body 22 and of its cylindrical portion intended to be coupled to the arm 18 of the robot, the housing for the first gearmotor 27 can be entirely obtained in the first hollow body 22 or even partially in the arm 18 of the robot , but always in such a way that the first gearmotor 27 is substantially included within the volumes defined by the geometry of the arm 18 and the first hollow body 22, with particular reference to the dimensions of the section of this arm. In correspondence to the second hollow body 24 a further housing for a second gearmotor 29 is provided. In particular, as visible in Figure 2, the hollow body 24 presents housing externally on its side wall in which the second gear motor 29 is received, essentially orientated parallel to the axis VI. Thanks to the elbow conformation of the hollow bodies 22 and 24, the gearmotor 29 can be found distanced from the walls of the hollow body 22 so as to never interfere with the latter whatever the angular position assumed by the hollow body 24 with respect to the hollow body 22. The particular arrangement of the gearmotor 29 described above allows maintaining of the transverse bulk of the wrist within a limited threshold. Also, since the gearmotor 29 is inclined with respect to the axis V by an angle equal to the angle of inclination of the axis VI respect to the axis V, in this case equal to about 60°, when it is brought into rotation by the hollow body 24, the inertia forces opposing the rotary motion of the gearmotor 29 are limited.

Between the first hollow body 22 and the second hollow body 24 a single crossed roller bearing 33 of known type is arranged, having an inner ring 32 and rigidly connected to the first hollow body 22, while an outer ring 34 is rigidly connected to the second hollow body 24. A single crossed roller bearing 37 is also provided between the second hollow body 24 and the third hollow body 26, with an outer ring 36 rigidly connected to the second hollow body 24 and an inner ring 38 rigidly connected to the third hollow body 26.

Each gearmotor 27, 29 comprises a motor 28, 30, a coupling flange 31, a gearbox 40 as already indicated above, and a pinion 42, 46. The gearboxes 40 are characterized by a high transmission ratio and are preferably of the epicyclic or harmonic type. Each gearbox 40 is coupled at its one end to its relative motor 28, 30 through the coupling flange 31. The coupling flange is connected by screws 35a to the motor 28, 30 and to the gearbox by means of other screws 35b.

At the other end, the gearbox 40 carries the pinion 42, 46 for the transmission of motion, which is now fixed by means of a plurality of screws 35c. The first gearmotor 27 comprising the first motor 28, gearbox 40 and a bevel pinion 42 is fixed by screws in abutment with a bottom wall 39 of the respective housing. Between the bottom wall 39 of the housing and the end of the gearbox which is fixed to the bevel pinion 42, a flange 41 for fixing and adjustment of the clearance is interposed. During assembly of the wrist, the thickness of the bushing 41 is adapted so as to obtain the correct meshing of the pair of bevel gears. The bevel pinion 42 meshes with the internal teeth of a ring bevel gear 44, and this, being fixed by means of screws (not shown) to the outer ring 34 of bearing 33, is rigidly connected to the second hollow body 24. The second gearmotor 29 comprising the second motor 30, gearbox 40 and a cylindrical pinion 46 is inserted into the slot formed in the second hollow body 24 and is secured in abutment with a bottom wall 43 of said housing by means of screws. The cylindrical pinion 46 meshes with a ring-shaped cylindrical wheel 48 which is fixed to the inner ring 38 of bearing 37.

The motion of rotation from the motor 28 is transformed through the gearbox 40 and transferred to the bevel pinion 42 which rotates the ring bevel gear 44 rigidly connected to the outer ring 34 of bearing 33, in turn fixed to the second hollow body 24. In this way, the rotation of the second hollow body 24 about the axis V is carried out. When the second motor 30 is activated, the rotation is transferred through the gearbox 40 to the cylindrical pinion 46. The cylindrical pinion 46 meshes with the cylindrical wheel 48, which is rigidly connected to the inner ring 38 and the third hollow body 26. In this way the rotation of the third hollow body 26 around the axis VI is carried out.

The internal cavity of the wrist allows the passage of supply cables and/or ducts C of the welding head intended to be associated with the flange F. These cables and/or ducts C are associated with a bushing 47.

As indicated above, the said known hollow wrist configuration is also used in the preferred embodiment of the robot according to the invention, it being understood, however, that the teachings of the invention are also applicable to robots with different configurations.

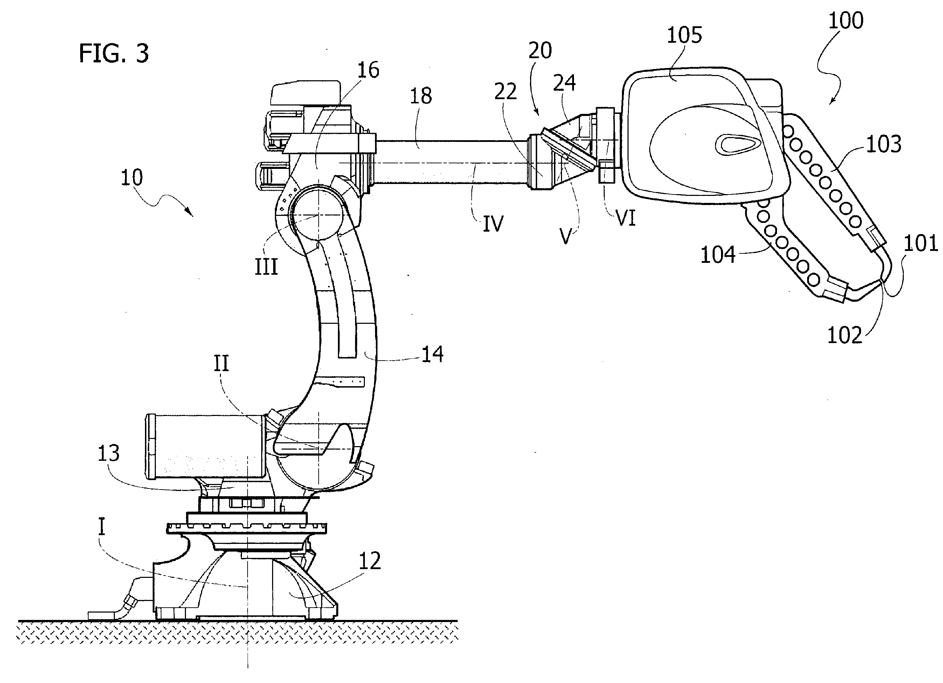

Figure 3 of the accompanying drawings shows a first embodiment of the robot according to the invention. In this figure, the parts common to those of Figure 1 are designated by the same reference number.

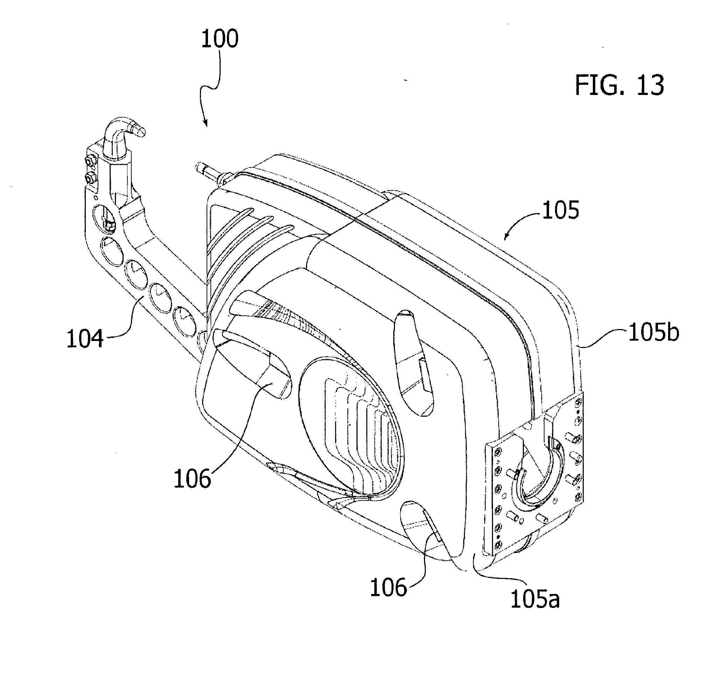

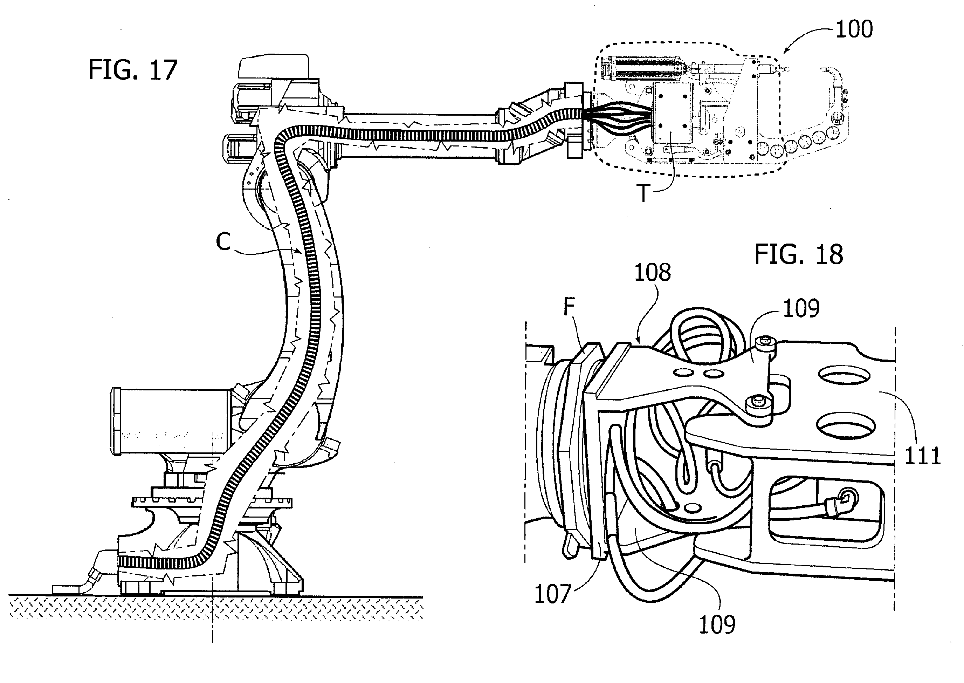

Figure 3 shows an embodiment in which the robot has an integrated tool consisting of an electric spot welding head, of the type in which one of the two electrode-holding arms is fixed, while the other arm is oscillatingly mounted. In place of such a welding head with oscillating arm, it is possible, however, to provide a welding head of the illustrated type of Figures 13 and 17, in which one of the two electrode-holding arms is fixed and the other arm is linearly slidable or other typology of tool.

Figure 17 of the accompanying drawings, which shows a schematic section of the robot, is particularly useful for illustrating a fundamental feature of the present invention. In this figure, the welding head is of the type with a linearly movable arm, but it is evident that what is stated here applies to both types of heads.

As seen in Figure 17, the robot according to the invention and the known robot of Figure 1, have in common the fact that through the entire chain of the robot elements and through the robot wrist, a continuous internal passage is defined in which the bundle C of cables and supply pipes is received. In Figure 17 the case in which all the cables and pipes are contained within a single flexible sheath is illustrated, but of course this feature is not essential and the bundle of cables and pipes may simply be provided along its extension of a plurality of tightening clamps.

In the case of known robots, and also in the specific case of the known robot illustrated in Figures 1 and 2, the bundle of supply cables and pipes is interrupted in correspondence of the connection flange F of the tool associated with the robot. Typically, such a flange is provided with a plurality of fittings for the connection of cables and pipes arranged on the robot with cables and/or separate pipes that are associated with the welding head mounted on the robot.

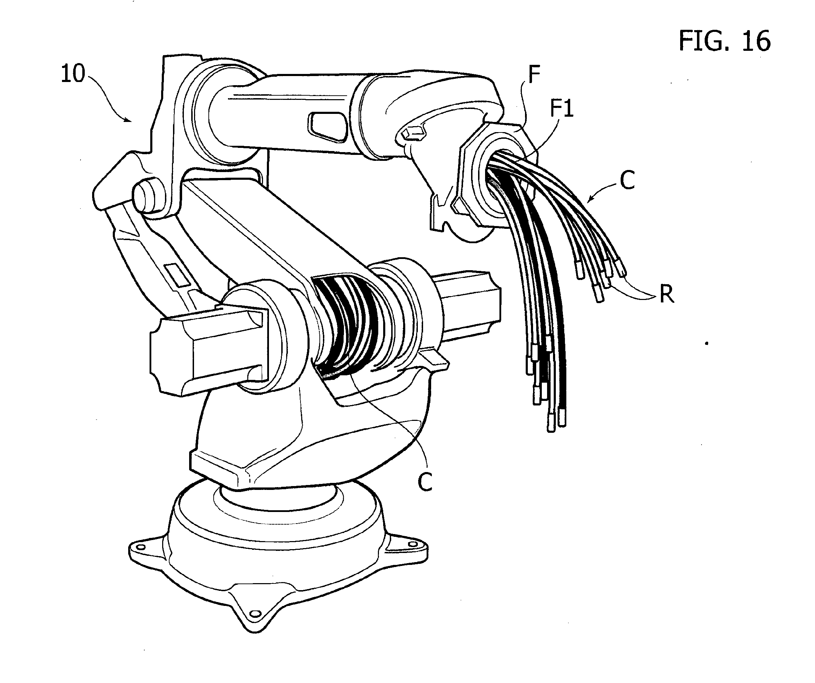

In contrast to this arrangement, in the robot according to the invention no rapid replacement of the tool carried by the robot is provided and the tool (in this specific example the welding head) is not provided with cables and separate pipes that are connected to the cables and pipes of the robot when the tool is mounted on the robot flange. As clearly shown in Figures 16, 17, in the case of the robot according to the invention, the cables and pipes that pass through the entire extension of the robot and the hollow robot wrist continue , without interruption, in a passage F1 formed through the flange F (see also Figure 16) up to an input connector provided on the electrical transformer T arranged within the structure of the welding head.

The welding head is therefore fully integrated into the robot, so that together, the robot and welding head constitutes a single "welding machine," without any distinction between the robot part and the tool part, and without any possibility of rapid replacement of the tool. This solution, compared to the known solution from the document US 8,006,586 B2, has the advantage of not providing any connector of connection between cables and pipes of the robot and separate cables and pipes arranged on board of the welding head and therefore does not entail the drawback of the known solution, wherein the cables and pipes associated with the head, which extend from the flange of the robot towards the head, are at least partially exposed to the outside.

As is visible in the accompanying drawings and as will be illustrated in further detail below, this advantage is further enhanced by providing an outer casing for the welding head that forms a prolongation of the body of the robot and that completely hides the tract of cables and pipes which extend beyond the flange of the robot.

In Figure 3, the number 100 indicates the welding head as a whole, comprising the two electrodes 101, 102 carried by the respective electrode-holding arms 103, 104. The internal structure of the head is hidden by the casing 105, having a rear opening for connection to the robot wrist and a front opening from which the electrode arms 103, 104 of the welding head protrude.

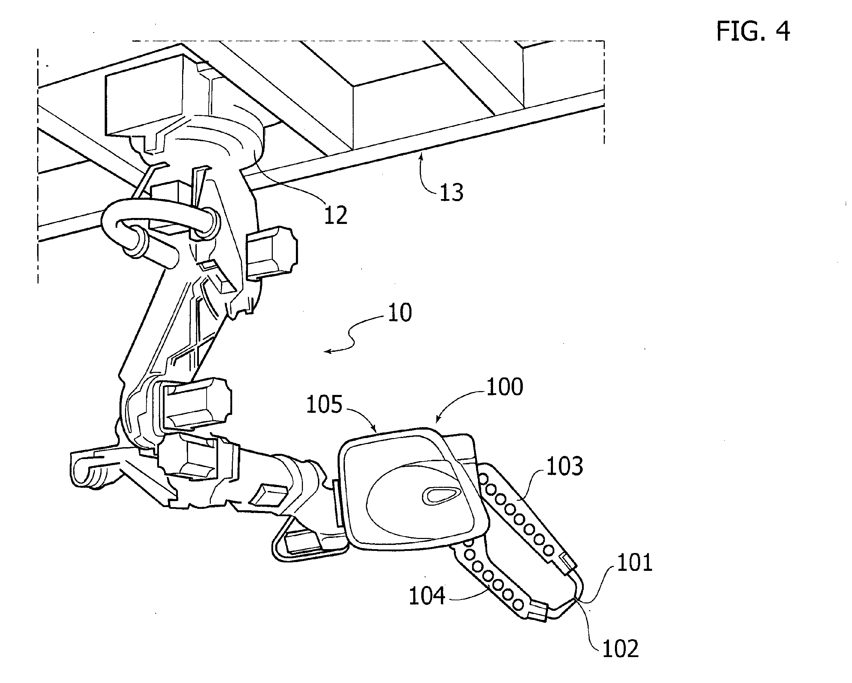

Figure 4 shows a second embodiment of the invention in which the robot 10 has a structure essentially identical to that of the robot of Figure 3 but is mounted in the inverted position, with the base structure 12 fixed to a "ceiling" 13 (an overhead frame) of an industrial plant.

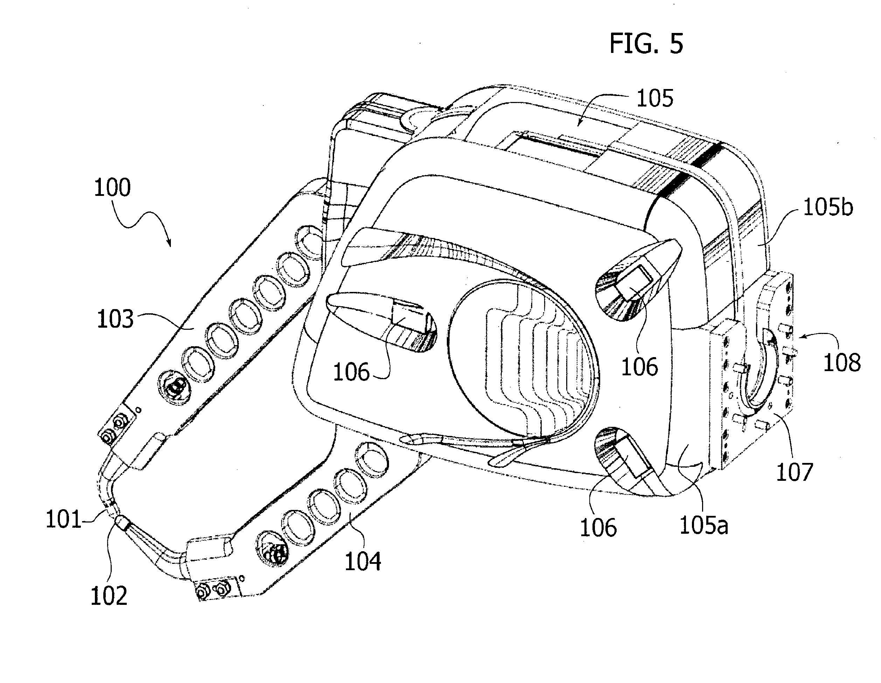

Figure 5 shows a perspective view on an enlarged scale of the welding head 100, in which it is clearly visible that the casing 105 is constituted by two half shells 105a, 105b coupled together and locked by the locking tie rod 106. Figure 5 also shows the rear wall 107 of a connecting flange 108, best seen in Figure 18, serving to connect the flange F of the robot wrist to the supporting structure of the welding head. As shown in Figure 18, the bracket 108 includes the rear wall 107 and two wings 109 which are parallel and spaced, projecting orthogonally from the rear wall 107.

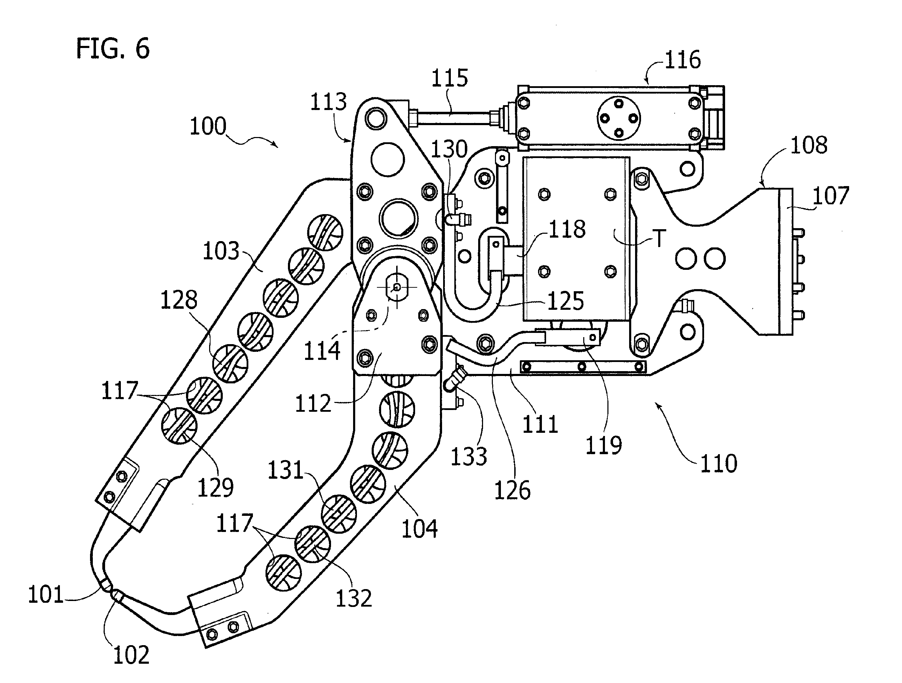

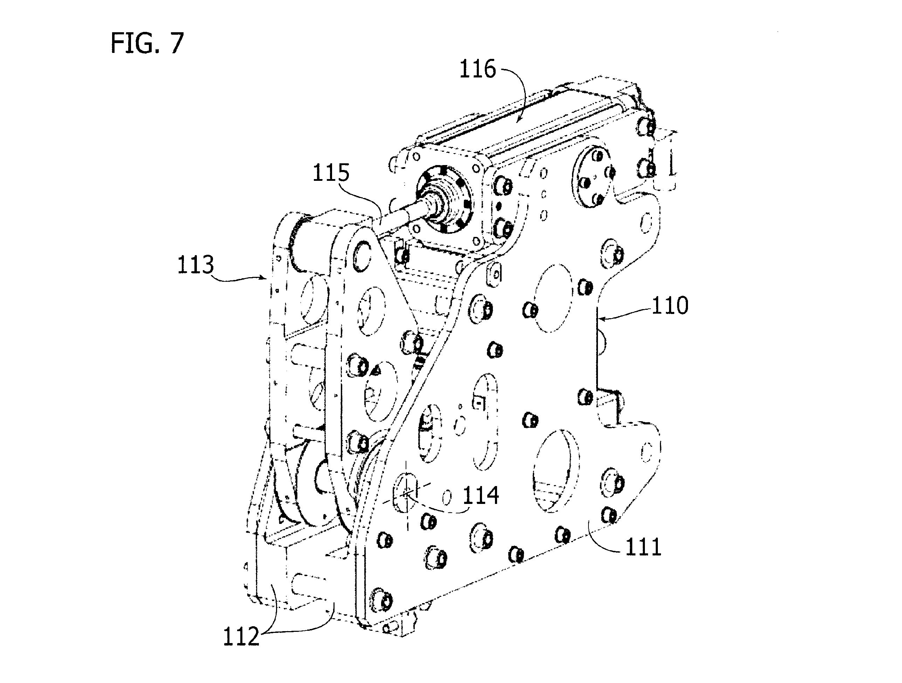

With reference to Figures 6, 7, the welding head 100 comprises a supporting structure 110, including two steel plates 111 which are parallel and spaced, rigidly connected to each other. The structure of the electrode-holding arm 104 is rigidly connected by screws to a pair of brackets 112 (Figure 7) fixed to the inner surfaces of the two plates 111. The structure of the electrode-holding arm 103 is instead connected to an oscillating arm 113 which is articulately mounted between the two plates 111 around an axis of oscillation 114 and which is controlled by the stem 115 of an electro-mechanical actuator 116, which is also supported by the two plates 111. The actuator 116 is itself a known type, comprising an electric motor, a gearbox and a nut placed in rotation by the electric motor via the gearbox. The rotation of the nut causes a linear movement of a screw that is screwed into it, this screw being connected to the stem 115.

The components of the actuator 116 are not illustrated herein because, as said, this actuator is realizable according to any known configuration and because the elimination of these details from the drawings renders them more readily and easily understood.

The electric current for the welding is carried across the electrodes 101, 102 by passing it through the structure of the arms 103, 104, consisting of aluminum, and having a hollow prism configuration, with side walls bearing lightening holes 117. The body of the arms 103, 104 is electrically connected to the two output poles 118, 119 of an electric transformer T arranged between the two plates 111 of the supporting structure of the welding head.

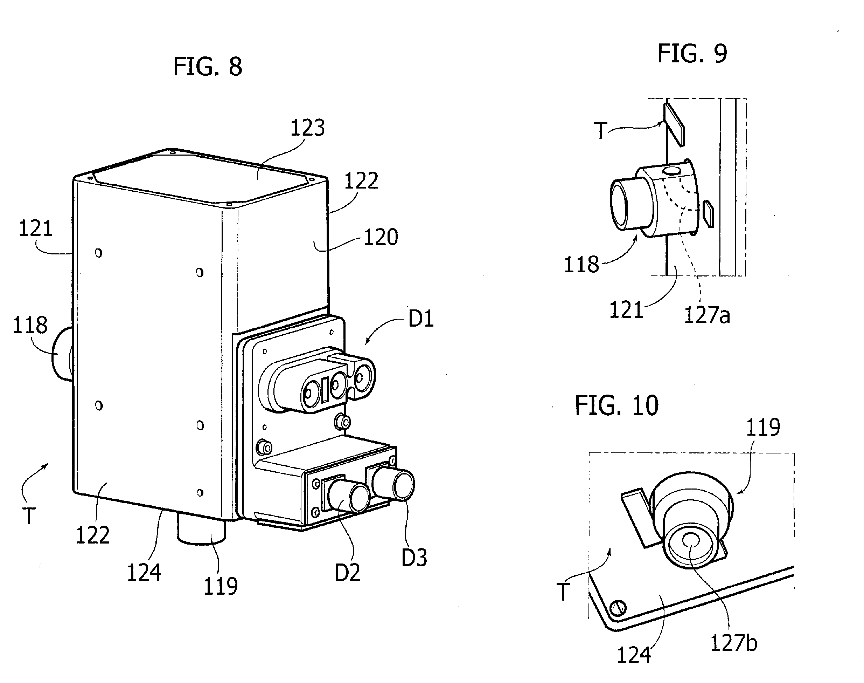

With reference also to Figure 8, the body of the transformer T has a rear wall 120 facing towards the flange of the robot, a front wall 121 opposite to it, two side walls 122, and end walls 123 and 124 (respectively upper and lower in the orientation illustrated).

According to a further important feature of the invention, which allows the relaying of particular compactness to the welding head, the two output poles 118 and 119 of the transformer T are arranged on different walls of the transformer body. More precisely, the pole 118 is provided on the front wall 121, while the pole 119 is provided on the lower end wall 124. The poles 118, 119 are also electrically connected to the structure of the respective arms 103, 104 by means of an elastically deformable strip 125 is, having a general U-configuration (Figure 6) and a strip 126, also elastically deformable, having a general S-configuration. The arrangement of one of the two output poles of the transformer T (specifically pole 119) on the lower wall 124 of the transformer T allows reduction of the distance in the horizontal direction of Figure 6 between the transformer T and the electrode-holding arms 103, 104. The size of the head is therefore particularly reduced in its longitudinal direction, i.e. in a direction that goes from the flange of the robot towards the welding electrodes 101, 102.

Both the transformer T and the welding electrodes 101, 102 require fluid-refrigeration. Therefore, in the bundle of cables and pipes which extends beyond the flange of the robot (see Figure 16) at least one delivery pipe of refrigerant fluid is included, along with at least one return pipe of refrigerant fluid. With reference to Figures 8, 9 and 10 the delivery pipe of the refrigerant fluid sends the refrigerant fluid above all to the cooling circuit (not shown) provided inside of the transformer T. From the internal cooling circuit to the transformer T, the refrigerant fluid flows through two ducts 127a, 127b formed respectively in the cylindrical bodies constituting the output poles 118,119 of the transformer T. The duct 127a protrudes radially from the body 118, while the duct 127b coaxially, on the end of the terminal body 119. At the output end of the ducts 127a, 127b, connection fittings (not shown) for connection pipes are arranged, which lead the refrigerant fluid to the arm 103 and the electrode 101 and the arm 104 and electrode 102, respectively. In particular (see Figure 6) the electrode 101 receives the refrigerant fluid through a flexible pipe 128 disposed through the inner cavity of the arm 103, the refrigerant fluid heated by the electrode 101 being then conveyed into another flexible pipe 129, also disposed in the internal cavity of the arm 103.

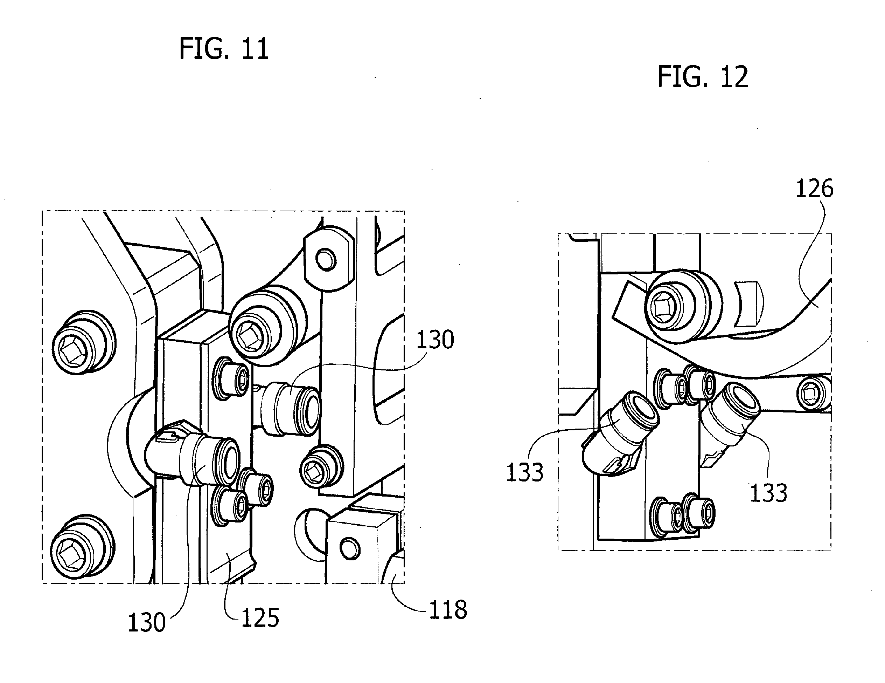

The proximal ends of the pipes 128, 129 are connected via connectors 130 (see Figures 6 and 11). One of the two connectors 130 is connected by the flexible tube to the connector arranged on the exit end of the tract 127a (Figure 9) while the other connector 130 is connected to a flexible pipe (not shown) which returns to the inside of the robot, without passing through the transformer T. This tract carries the refrigerant return fluid from the electrode 101 to the robot. Even within the arm 104 there are two flexible pipes 131, 132 provided for sending the refrigerant fluid to the electrode 102 and for the return of the refrigerant fluid that has cooled the electrode 102. The two flexible pipes are indicated with 131, 132 and are connected to two connectors 133 (Figures 6 and 12). One of the two connectors 133 is connected through a flexible pipe (not shown) to the connector, arranged on the outlet end of the tract 127b (Figure 10) while the other connector 133 is connected to a flexible pipe which is returned directly to the inside of the robot.

Figure 8 of the accompanying drawings also shows that on the rear wall 120 of the transformer T a three-pole electrical connector D1 is provided, for the connection of the power cables, with the three poles aligned in a direction parallel to the transverse direction of the head (i.e. the direction orthogonal to the general plane of the two arms). On the wall 120 an electrical connector D2 for electrical signal cables is also arranged.

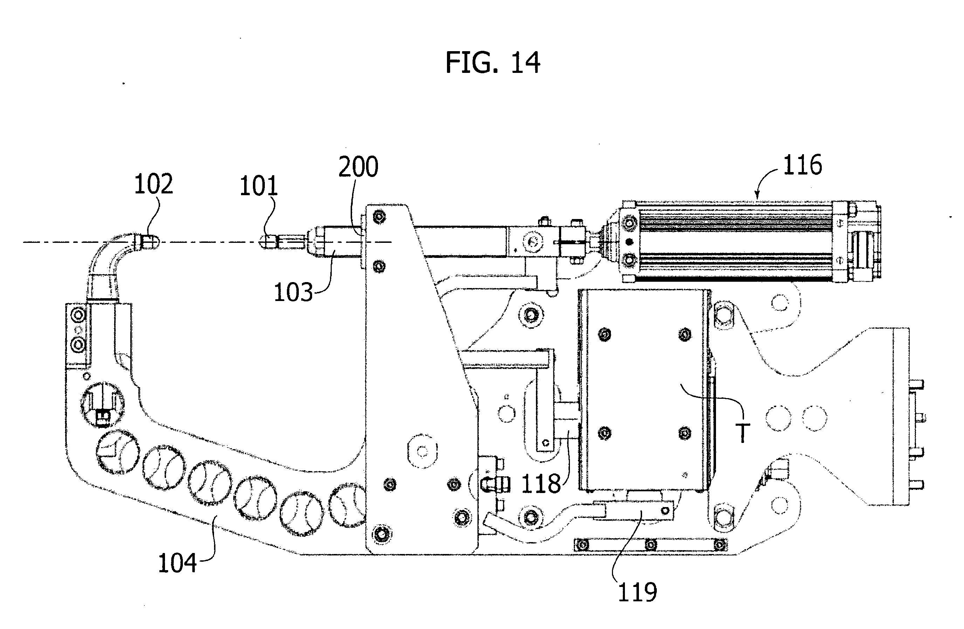

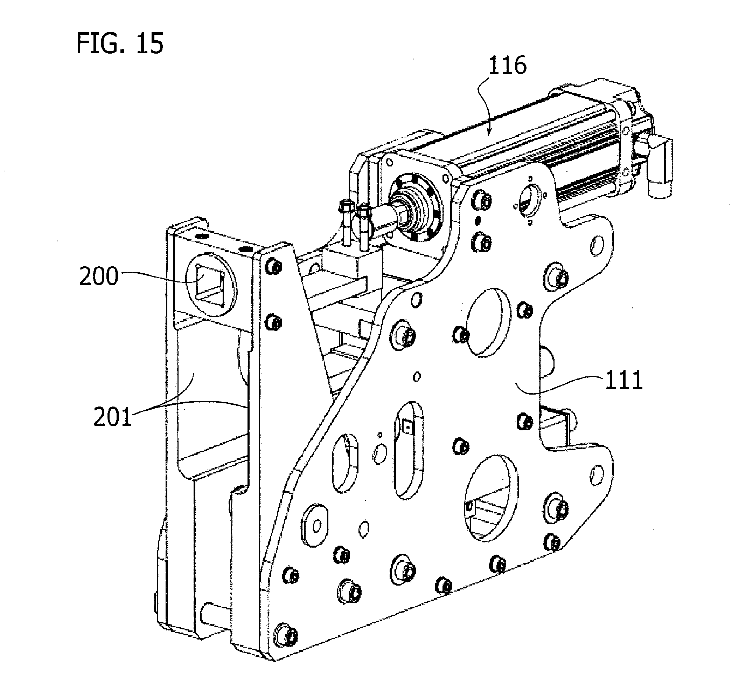

Figure 13 of the accompanying drawings is a perspective view illustrating a variant of Figure 5 corresponding to the version with the sliding arm of the welding head. In this figure, the parts common to those of Figure 5 are designated by the same reference number. Also in this case the structure of the welding head 100 is completely covered by a casing 105 consisting of two half shells 105a, 105b joined together by tie rod connecting means 106. The supporting structure of the welding head of Figure 13 is visible in Figures 14, 15. It is essentially similar to that of the version already described above except that in this case the fixed arm 104 has an elbow configuration in such a way such that the electrode 102 is disposed on the axis of the actuator 116.

The other arm 103 is constituted of a stem guided in a slidable way in a prismatic guide 200 carried at the ends by two plates 201 fixed to the plates 111 of the head structure. The stem 103 is connected at its end to the stem of the actuator 116 so as to be linearly displaceable along the axis of the actuator 116 between an open position, in which the electrodes 101, 102 are spaced apart, and a closed position, in which these electrodes are in contact with each other. The arrangement of the transformer T is identical to that described above with the output poles of the transformer T disposed on the front wall and on the lower wall of the transformer. In this case, the elastically deformable strip 125 has a U-shaped configuration orientated horizontally (Figure 14) instead of vertically as in the case of the Figure 6 version and is directly connected to the stem constituting the arm 103. Also in this case a cooling circuit of the electrodes is of course provided, analogous to that described above with reference to Figure 6, which in Figure 14 is not shown for greater simplification of the drawing. Figure 16 shows the robot according to the invention with the welding head disassembled and highlights, as in the robot according to the invention, the bundle of cables and pipes C coming out through a central opening F1 of the flange F of the robot and continues directly up to the connection fittings R that connect directly to electrical connectors and the hydraulic couplings provided inside the welding head. The bundle C thus comes from the base of the robot up to the equipment inside the welding head, remaining completely hidden within the structure of the robot and inside the casing 105 of the welding head 100 without any exposed part, even in the final stretch between the flange F of the robot and the equipment inside the welding head, and without any interruption or connection of cables or pipes at the flange F of the robot.

This arrangement is also clearly visible, as already described above, in Figure 17, which refers by way of example to the case of a welding head of the electrode sliding type, it being understood that it is also immediately applicable to the case of a welding head with oscillating arm, or to another tool.

Of course, without prejudice to the principle of the invention, the details of construction and the embodiments may widely vary with respect to those described and illustrated purely by way of example, without departing from the scope of the present invention as defined in the appended claims.

## Claims

1. Multi-axis industrial robot, comprising:
- a base structure (12),
- an articulated robot wrist (20), and
- a chain of mutually articulated robot elements (13, 14, 16, 18) connecting said base structure (12) to said robot wrist (20),
- wherein said robot wrist (20) ends with a flange (F) to which is rigidly connected an electric spot welding head (100) that requires a power supply and/or a fluid supply,
- wherein the welding head comprises a supporting structure (111) rigidly connected to the robot wrist (20), and a pair of welding electrodes (101, 102) carried by respective electrode-holding arms (103, 104), wherein at least one of said electrode-holding arms (103) is movably mounted on the support structure (111) of the head (100) between an open position and a closed position, said head (100) further comprising an actuator (116) for driving said movable arm (103) and an electrical transformer (T) for the application of a welding electrical voltage to the electrodes (101, 102),
- wherein, through said chain of mutually articulated robot elements (12, 13, 14, 16, 18) and through said robot wrist (20) a continuous internal passage is defined in which one or more cables and/or pipes for said power supply and/or said fluid supply to the tool (100) are received,
- wherein the structure of the welding head is completely covered by a casing (105) consisting of two half-shell sides (105a, 105b) coupled to each other and having main walls parallel to the general plane of the two electrode-holding arms, said casing having a rear opening for the connection of the supporting structure of the welding head (100) to the flange (F) of the robot and a front opening from which the two electrode-holding arms (103, 104) of the welding head (100) protrude,
- and wherein said supply cables and preferably also said pipes (C), which are received through the continuous internal passage of the robot, continue further without interruption through a passage (F1) formed in said flange (F) and then inside said structure (111) of the welding head (100) up to a connector input (D1) provided on said transformer (T), whereby the said cables and pipes are arranged completely inside the robot and inside the welding head (100), without the need to provide separate cables or pipes for the welding head (100) connected to the cables and the pipes of the robot in correspondence to said flange (F).

2. Robot according to claim 1, **characterized in that** the supporting structure (111) of the head (100) is fixed to the flange (F) of the robot through the interposition of an intermediate bracket (108) screwed on one side to the flange (F) and on the other side to the supporting structure (111) of the robot.

3. Robot according to claim 1, **characterized in that** the body of the electrical transformer (T) presents said rear wall (121) facing towards the flange (F) of the robot, a front wall (120) opposite to it, two side walls (122) and two end walls (123, 124), **characterized in that** the two output poles (118, 119) of the transformer (T), electrically connected to the two electrode-holding arms (103, 104), are arranged one on the front wall (121) and the other on an end wall (124) of the body of the transformer (T).

4. Robot according to claim 3, **characterized in that** said output poles (118, 119) of the electrical transformer (T) have cylindrical bodies with respective internal passages (127a,127b) both supplying cooling fluid from a cooling circuit inside the transformer (T) towards the welding electrodes (101,102), fluid pipes being provided for returning the fluid which has cooled the welding electrodes to the robot without passing through the transformer (T).

## Patentansprüche

1. Mehrachsiger Industrieroboter, umfassend:
- ein Untergestell (12),
- ein bewegliches Gelenk (20), und
- eine Kette von wechselseitig, gelenkig angebrachten Roboterelementen (13, 14, 16, 18), die das Untergestell (12) mit dem beweglichen Gelenk (20) verbinden,
- wobei das Gelenk (20) mit einem Befestigungsflansch (F) endet, an dem ein elektrischer Punktschweißkopf (100) starr befestigt ist, der eine Stromversorgung und/oder eine Fluidzuführung benötigt,
- wobei der Schweißkopf eine mit dem Gelenk (20) starr verbundene Tragkonstruktion (111) und ein Paar Schweißelektroden (101, 102) umfasst, die durch jeweilige Elektrodenhaltearme (103, 104) getragen werden, wobei mindestens einer der Elektrodenhaltearme (103) an der Tragkonstruktion (111) des Kopfes (100) zwischen einer geöffneten Stellung und einer geschlossenen Stellung bewegbar angebracht ist, der Kopf (100) des Weiteren ein Stellelement (116) zum Antrieb des bewegbaren Arms (103) und einen elektrischen Transformator (T) zur Anwendung einer elektrischen Schweißspannung für die Elektroden (101, 102) umfasst,
- wobei durch die Kette von wechselseitig, gelenkig angebrachten Roboterelementen (12, 13, 14, 16, 18) und durch das Gelenk (20) ein ununterbrochener innerer Durchgang bestimmt ist, in welchem ein oder mehrere Leitungskabel und/oder Rohre zur Stromversorgung und/oder zur Fluidzuführung für das Werkzeug (100) aufgenommen sind,
- wobei der Aufbau des Schweißkopfes vollständig durch ein Gehäuse (105) bedeckt ist, das aus zwei Halbschalenseiten (105a, 105b) besteht, die miteinander verbunden sind und Hauptwände parallel zur Hauptebene der zwei Elektrodenhaltearme aufweisen, wobei das Gehäuse eine hintere Öffnung zur Verbindung der Tragkonstruktion des Schweißkopfes (100) am Befestigungsflansch (F) des Roboters und eine vordere Öffnung aufweist, von der die zwei Elektrodenhaltearme (103, 104) des Schweißkopfes (100) hervorstehen,
- und wobei die Versorgungsleitungen und vorzugsweise auch die Rohre (C), die durch den ununterbrochenen inneren Durchgang des Roboters aufgenommen sind, sich ohne Unterbrechung weiter durch einen in dem Befestigungsflansch (F) ausgebildeten Durchgang (F1) und anschließend in der Konstruktion (111) des Schweißkopfes (100) bis zu einem Steckvorrichtungseingang (D1) fortsetzen, der an dem Transformator (T) vorgesehen ist, wodurch die Leitungskabel und Rohre vollständig im Innern des Roboters und im Innern des Schweißkopfes (100) angeordnet sind, ohne gesonderte Leitungskabel oder Rohre für den Schweißkopf (100), der mit den Leitungskabeln und den Rohren des Roboters im Bereich zu dem Befestigungsflansch (F) verbunden ist, vorzusehen.

2. Roboter nach Anspruch 1, **dadurch gekennzeichnet, dass** die Tragkonstruktion (111) des Kopfes (100) am Befestigungsflansch (F) des Roboters befestigt wird durch Einfügung einer Zwischenkonsole (108), die auf einer Seite am Befestigungsflansch (F) und auf der anderen Seite an der Tragkonstruktion (111) des Roboters angeschraubt ist.

3. Roboter nach Anspruch 1, **dadurch gekennzeichnet, dass** das Gehäuse des elektrischen Transformators (T) die in Richtung des Befestigungsflansches (F) des Roboters weisende Rückwand (121), eine dieser gegenüber liegende Vorderwand (120), zwei Seitenwände (122) und zwei Stirnwände (123, 124) aufweist, **dadurch gekennzeichnet, dass** von den mit den zwei Elektrodenhaltearmen (103, 104) elektrisch verbundenen zwei Ausgangspolen (118, 119) des Transformators (T) der eine an der Vorderwand (121) und der andere an einer Stirnwand (124) des Gehäuses des Transformators (T) angeordnet ist.

4. Roboter nach Anspruch 3, **dadurch gekennzeichnet, dass** die Ausgangspole (118, 119) des elektrischen Transformators (T) zylindrische Körper mit jeweiligen inneren Durchgängen (127a, 127b) besitzen, die beide aus einem Kühlkreislauf im Innern des Transformators (T) Kühlfluid in Richtung der Schweißelektroden (101, 102) zuführen, wobei Fluidrohre zur Rückführung des Fluids vorgesehen sind, welches die Schweißelektroden an dem Roboter gekühlt hat, ohne sich durch den Transformator (T) zu bewegen.

## Revendications

1. Robot industriel à plusieurs axes, comprenant :
- une structure de base (12),
- un poignet de robot articulé (20), et
- une chaîne d'éléments de robot mutuellement articulés (13, 14, 16, 18) reliant ladite structure de base (12) audit poignet de robot (20),
- dans lequel ledit poignet de robot (20) se termine par une bride (F) à laquelle une tête de soudage électrique par points (100), qui nécessite une alimentation électrique et/ou une alimentation en fluide, est reliée de manière rigide,
- dans lequel la tête de soudage comprend une structure de support (111) reliée de manière rigide au poignet de robot (20), et une paire d'électrodes de soudage (101, 102) portées par des bras porte-électrode respectifs (103, 104), où au moins l'un desdits bras porte-électrode (103) est monté de manière mobile sur la structure de support (111) de la tête (100) entre une position ouverte et une position fermée, ladite tête (100) comprenant en outre un actionneur (116) pour entraîner ledit bras mobile (103) et un transformateur électrique (T) pour l'application d'une tension électrique de soudage aux électrodes (101, 102),
- dans lequel, à travers ladite chaîne d'éléments de robot mutuellement articulés (12, 13, 14, 16, 18) et à travers ledit poignet de robot (20), un passage interne continu est défini dans lequel un ou plusieurs câble(s) et/ou tuyau(x) pour ladite alimentation électrique et/ou ladite alimentation en fluide à l'outil (100), sont reçus
- dans lequel la structure de la tête de soudage est entièrement recouverte par un boîtier (105) constitué par deux côtés de demi-coque (105a, 105b) couplés l'un à l'autre et ayant des parois principales parallèles au plan général des deux bras porte-électrode, ledit boîtier ayant une ouverture arrière pour la liaison de la structure de support de la tête de soudage (100) à la bride (F) du robot et une ouverture avant à partir de laquelle les deux bras porte-électrode (103, 104) de la tête de soudage (100) font saillie,
- et dans lequel lesdits câbles d'alimentation et de préférence également lesdits tuyaux (C), qui sont reçus à travers le passage interne continu du robot, continuent en outre sans interruption à travers un passage (F1) formé dans ladite bride (F) et ensuite à l'intérieur de ladite structure (111) de la tête de soudage (100) jusqu'à une entrée de connecteur (D1) prévue sur ledit transformateur (T), moyennant quoi lesdits câbles et lesdits tuyaux sont entièrement agencés à l'intérieur du robot et à l'intérieur de la tête de soudage (100), sans qu'il soit nécessaire de fournir des câbles ou des tuyaux séparés pour la tête de soudage (100) reliée aux câbles et aux tuyaux du robot en correspondance avec ladite bride (F).

2. Robot selon la revendication 1, **caractérisé en ce que** la structure de support (111) de la tête (100) est fixée à la bride (F) du robot par interposition d'un support intermédiaire (108) vissé sur un côté à la bride (F) et sur l'autre côté à la structure de support (111) du robot.

3. Robot selon la revendication 1, **caractérisé en ce que** le corps du transformateur électrique (T) présente ladite paroi arrière (121) faisant face à la bride (F) du robot, une paroi avant (120) opposée à celle-ci, deux parois latérales (122) et deux parois d'extrémité (123, 124), **caractérisé en ce que** les deux pôles de sortie (118, 119) du transformateur (T), électriquement reliés aux deux bras porte-électrode (103, 104), sont agencés l'un sur la paroi avant (121) et l'autre sur une paroi d'extrémité (124) du corps du transformateur (T).

4. Robot selon la revendication 3, **caractérisé en ce que** lesdits pôles de sortie (118, 119) du transformateur électrique (T) ont des corps cylindriques avec des passages internes respectifs (127a, 127b) fournissant tous deux un fluide de refroidissement à partir d'un circuit de refroidissement à l'intérieur du transformateur (T) vers les électrodes de soudage (101, 102), des tuyaux de fluide étant prévus pour renvoyer le fluide qui a refroidi les électrodes de soudage au robot sans traverser le transformateur (T).
